# FASCICULE DE BREVET EUROPEEN

(11) **EP 2 464 530 B1**
(45) Date de publication et mention de la délivrance du brevet: **01.04.2015**
(21) Numéro de dépôt: 10737593.3
(22) Date de dépôt: 04.08.2010
(51) Int. Cl.: F25B 41/04, F24F 3/153, B60H 1/00

(54) **CIRCUIT DE CLIMATISATION AMÉLIORÉ**
VERBESSERTE KLIMAANLAGENKREISLAUF
IMPROVED AIR CONDITIONING CIRCUIT

(30) Priorité: 14.08.2009 FR 0903971
(43) Date de publication de la demande: 20.06.2012
(73) Titulaire: VALEO SYSTEMES THERMIQUES, 78321 Le Mesnil Saint Denis Cedex (FR)
(72) Inventeur: GUITARI, Imed, F-78990 Elancourt (FR)
(74) Mandataire: Vieillevigne, Sébastien Nicolas Bernard
(86) Numéro de dépôt international: PCT/EP2010/061357
(87) Numéro de publication internationale: WO 2011/018400

(56) Documents cités:
- EP-A- 1 850 075
- WO-A-01/40004
- WO-A-03/051657
- DE-A1-102004 003 501
- US-A1- 2001 003 311
- US-A1- 2003 182 961

## Description

L'invention se rapporte à un dispositif de climatisation pour un véhicule automobile.

Elle concerne plus particulièrement un dispositif de climatisation comportant un circuit de fluide réfrigérant comprenant un compresseur, au moins un organe de détente, une branche de circuit amont et une branche de circuit aval, la branche de circuit amont et la branche de circuit aval reliant en parallèle le compresseur et l'organe de détente.

La branche de circuit amont comprend un premier échangeur thermique agencé pour être traversé par un flux d'air destiné à être diffusé dans l'habitacle du véhicule, un premier organe de détente disposé en amont du premier échangeur thermique, et un accumulateur disposé en aval du premier échangeur thermique.

La branche de circuit aval comprend un deuxième échangeur thermique agencé pour être traversé par le flux d'air destiné à être diffusé dans l'habitacle automobile.

Le circuit de fluide réfrigérant comprend en outre un troisième échangeur thermique adapté pour fonctionner de manière réversible et agencé pour être traversé par un flux d'air extérieur à l'habitacle du véhicule ainsi qu'un système de raccordement commutable pour relier sélectivement le troisième échangeur thermique à la branche de circuit amont ou à la branche de circuit aval.

Un tel dispositif de climatisation est connu, par exemple, du document US 2003/0182961 A1.

Les fonctionnalités offertes par de tels dispositifs de climatisation, la complexité de leur conception et leur aptitude à être intégrés à bord du véhicule automobile sont des points critiques.

En particulier, le circuit de climatisation décrit dans US 2003/0182961 A1 présente une structure complexe et nécessite un nombre important d'éléments de commande. Le nombre important de conduites de fluide réfrigérant et de points de raccordement augmente en outre de façon significative le risque de fuites, les coûts de maintenance et/ou de réparation et les coûts de fabrication. De plus, une telle structure complexe nuit à une bonne intégration du circuit de fluide réfrigérant dans le véhicule.

L'invention a pour but d'améliorer l'existant. Elle vise un dispositif de climatisation tel que décrit précédemment dans lequel un système de raccordement commutable comprend un moyen de commutation, notamment une vanne à trois voies de fluide, relié à une entrée/sortie du troisième échangeur thermique, à la branche de circuit aval, et à la branche de circuit amont, ainsi qu'un organe de détente, relié à l'autre entrée/sortie du troisième échangeur thermique et à chacun des premier et deuxième organes de détente.

Un tel dispositif est capable de chauffer le flux d'air à destination de l'habitacle du véhicule ou de le refroidir selon la commutation du moyen de commutation. Il est également capable de déshumidifier le flux d'air destién à être distribué dans l'habitacle du véhicule de manière optimale. Il peut en outre dégivrer le troisième échangeur thermique. Il présente ainsi avantageusement quatre modes de fonctionnement.

La capacité de refroidissement peut être contrôlée au moyen de l'un des organes de détente et la capacité de chauffage au moyen de la capacité du compresseur. Le contrôle de la capacité de refroidissement et de chauffage permet de contrôler la déshumidification du flux d'air propre à être diffusé dans l'habitacle, en condensant l'humidité à travers le premier échangeur de chaleur et en le réchauffant à travers le deuxième échangeur de chaleur.

Le circuit de fluide réfrigérant du dispositif proposé ne comporte aucune mise en court-circuit fluidique, ou "bypass", de composants. De tels courts-circuits entraînent généralement des problèmes de stagnation et/ou de distribution d'huile et/ou de fluide réfrigérant.

Par rapport à l'état de la technique, en particulier tel que représenté par le document US 2003/0182961 A1, le dispositif proposé présente les avantages suivants :
- le dispositif présente un mode de fonctionnement dans lequel le flux d'air destiné à être diffusé dans l'habitacle peut être déshumidifié ;
- le troisième échangeur de chaleur peut être dégivré sans perte de capacité de chauffage ;
- le dispositif présente une conception simplifiée qui nécessite uniquement un moyen de commutation (par exemple une vanne à trois voies de fluide, ou deux vannes électriques), et un dispositif-organe de détente;
- une distribution optimale, selon l'évolution de sa densité, est obtenue dans le troisième échangeur de chaleur, aussi bien lorsqu'il est raccordé à la branche amont que lorsqu'il est raccordé à la branche aval ;
- le dispositif présente une conception plus simple, des chutes de pression interne plus faibles, en particulier du côté haute pression ;
- le dispositif proposé offre une intégration plus aisée à bord du véhicule d'un éventuel échangeur de chaleur interne, sans influence néfaste sur les performances en mode « chauffage » et en mode « refroidissement » du flux d'air destiné à être diffusé dans l'habitacle ;
- il n'existe aucun volume "mort", c'est-à-dire dépourvu de fluide réfrigérant en circulation, lors de la commutation entre les divers modes de fonctionnement ;
- le nombre de composants et de connexions est réduit, ce qui permet une intégration plus simple et diminue le risque de fuites ;
- le contrôle du dispositif est plus aisé puisque seuls un moyen de commutation (par exemple une vanne trois voies) et des organes de détente sont à commander ; et
- un câblage plus simple est obtenu puisque seuls un nombre moins important de composants doivent être connectés (notamment trois composants, voire seulement deux dans certains architectures simplifiées).

D'autres caractéristiques et avantages de la présente invention apparaîtront encore à la lecture de la description détaillée qui suit, comprenant des exemples de réalisation donnés à titre illustratif non limitatifs en référence aux dessins annexées, qui pourront servir à compléter la compréhension de la présente invention, l'exposé de sa réalisation et à contribuer à sa définition, le cas échéant sur lesquels :
- Les figures 1, 2 et 3 sont des schémas illustrant un dispositif de climatisation respectivement dans un premier mode de fonctionnement, dans un deuxième mode de fonctionnement et dans un troisième mode de fonctionnement,
- La figure 4 est un schéma d'une variante de réalisation du dispositif des figures 1 à 3, le dispositif étant dans un premier état de commutation,
- La figure 5 montre un dispositif-organe de détente intégré dans les dispositifs de climatisation des figures 1 à 4, vu en coupe transversale.

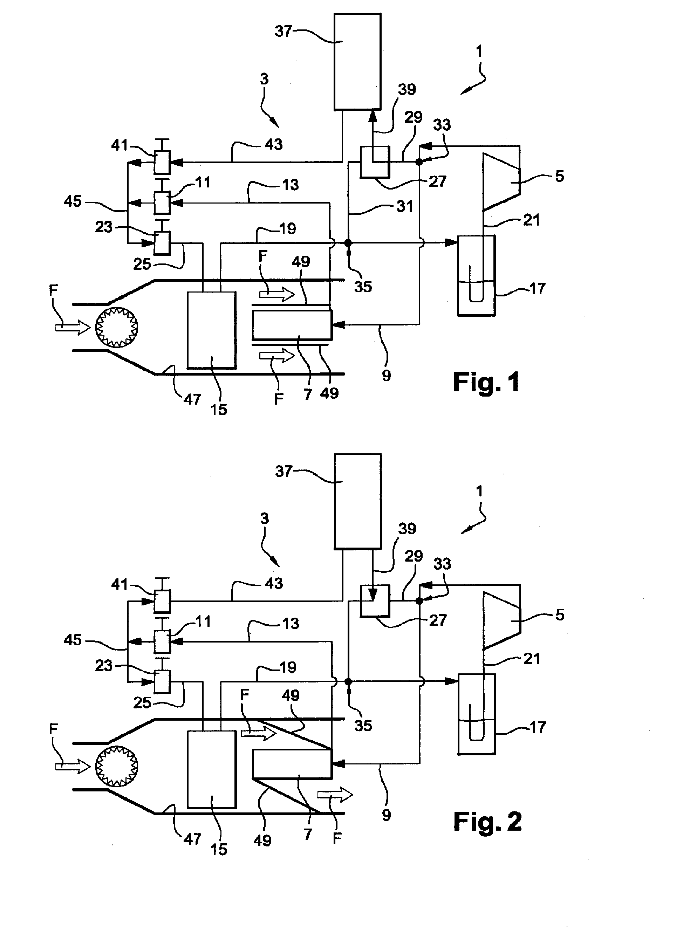

La figure 1 est un schéma illustrant un dispositif de climatisation 1 dans un premier état de commutation. Le dispositif de climatisation 1 pour un véhicule automobile comprend principalement un circuit de fluide réfrigérant 3.

Le circuit de fluide réfrigérant 3 comprend un compresseur 5 capable d'assurer une circulation de fluide à l'intérieur du circuit de fluide réfrigérant 3.

La sortie du compresseur 5 est reliée à l'entrée d'un premier échangeur de chaleur 7, fonctionnant en tant que condenseur 7, par l'intermédiaire d'une première conduite 9.

La sortie du premier échangeur de chaleur 7 est reliée à un premier organe de détente 11 par l'intermédiaire d'une deuxième conduite 13.

Le circuit de fluide réfrigérant 3 comporte en outre un deuxième échangeur thermique 15, fonctionnant en tant qu'évaporateur 15, dont la sortie est reliée à un accumulateur 17 par l'intermédiaire d'une troisième conduite 19.

En sortie, l'accumulateur 17 est relié à l'entrée du compresseur 5 par l'intermédiaire d'une quatrième conduite 21.

L'entrée du deuxième échangeur thermique 15 est reliée à un deuxième organe de détente 23 par l'intermédiaire d'une cinquième conduite 25.

Le circuit de fluide réfrigérant 3 comprend en outre un moyen de commutation 27, préférentiellement réalisé sous la forme d'une vanne trois voies 27.

Une première voie de la vanne trois voies 27 est reliée à la première conduite 9, en aval du compresseur 5 et en amont du premier échangeur de chaleur 7, par l'intermédiaire d'une sixième conduite 29.

Une deuxième voie de la vanne trois voies 27 est reliée à la troisième conduite 19, en aval du deuxième échangeur thermique 15 et en amont de l'accumulateur 17, par l'intermédiaire d'une septième conduite 31.

La sixième conduite 29 se raccorde à la première conduite 9 en un premier point de jonction 33, tandis que la septième conduite 31 se raccorde à la troisième conduite 19 en un deuxième point de jonction 35.

La troisième voie de la vanne trois voies 27 est reliée à un premier orifice de connexion d'un troisième échangeur thermique 37, capable de fonctionner de manière réversible en tant que condenseur ou évaporateur, par l'intermédiaire d'une huitième conduite 39. Le deuxième orifice de connexion du troisième échangeur thermique 37 est relié à un troisième organe de détente 41 par l'intermédiaire d'une neuvième conduite 43. Les premier et deuxième orifices de connexion du troisième échangeur thermique 37 constituent des entrées/sorties du troisième échangeur thermique 37.

Le premier organe de détente 11, le deuxième organe de détente 23 et le troisième organe de détente 41 sont également reliés entre eux par l'intermédiaire d'un ensemble de conduites 45.

Le deuxième organe de détente 23, le deuxième échangeur thermique 15 et l'accumulateur 17 forment, par rapport au compresseur 5, une branche amont du circuit de fluide réfrigérant 3.

Le premier échangeur de chaleur 7 et le premier organe de détente 11 forment, par rapport au compresseur 5, une branche aval du circuit de fluide réfrigérant 3.

Selon la commutation du moyen de commutation 27, le troisième échangeur thermique 37 se trouve raccordé soit à la branche amont, soit à la branche aval. Ainsi, selon la configuration du moyen de commutation 27, le troisième échangeur thermique 37 fonctionne alors soit en tant qu'évaporateur, soit en tant que condenseur.

À chaque fois, le troisième échangeur thermique 37 est agencé en parallèle soit du deuxième échangeur thermique 15, fonctionnant en tant évaporateur 15, soit du premier échangeur de chaleur 7, fonctionnant en tant condenseur 7.

Le moyen de commutation 27 et le troisième organe de détente 41 forment un système de raccordement commutable pour le troisième échangeur thermique 37.

Le deuxième échangeur thermique 15 est disposé dans un conduit d'air soufflé 47 débouchant dans l'habitacle du véhicule automobile. Le conduit d'air soufflé 47 canalise un flux d'air F depuis une entrée d'air vers au moins une sortie d'air apte à permettre la diffusion du flux d'air F dans l'habitacle du véhicule automobile.

Le premier échangeur de chaleur 7, fonctionnant en tant condenseur 7, est également disposé dans le conduit d'air soufflé 47, préférentiellement en aval du deuxième échangeur thermique 15.

Un système de volets 49, propre à être commandé, permet d'autoriser ou d'empêcher le passage du flux d'air F circulant dans le conduit d'air soufflé 47 à travers le premier échangeur de chaleur 7. La commande du système de volets 49 est, préférentiellement, fonction du mode de fonctionnement du circuit de fluide réfrigérant 3.

Le troisième échangeur thermique 37 est disposé de manière à être traversé par un flux d'air extérieur à l'habitacle. Il est typiquement disposé à l'avant du véhicule.

Le fluide réfrigérant parcourant le circuit de fluide réfrigérant 3 est par exemple un hydrofluorocarbure, en particulier le fluide connu sous la dénomination R134a, ou un composé à base d'hydrofluoro-oléfine, notamment le fluide connu sous la dénomination HF01234yf.

La présente invention trouve également une application avec les fluides sur-critiques, notamment le dioxyde de carbone. Dans ce cas, le premier échangeur thermique 7 peut prendre la forme d'un refroidisseur de gaz 7.

Selon un mode préférentiel de réalisation, le premier organe de détente 11, le deuxième organe de détente 23 et le troisième organe de détente 41 sont respectivement ou individuellement dépourvus de vanne électrique associée.

La figure 1 montre le trajet du fluide réfrigérant dans le circuit de fluide réfrigérant 3 dans un mode de fonctionnement, dit « mode refroidissement », destiné à refroidir le flux d'air apte à être distribué dans l'habitacle.

Le compresseur 5 comprime le fluide réfrigérant. Une faible quantité du fluide sortant du compresseur 5 parvient au premier échangeur de chaleur 7, tandis qu'une quantité plus grande, notamment environ 90% en masse, parvient à la vanne trois voies 27.

Dans ce mode de fonctionnement, dit « mode refroidissement », la première voie de la vanne trois voies 27 est en communication de fluide à la troisième voie de la vanne trois voies 27. Le fluide réfrigérant parvenant à la vanne trois voies 27 est envoyé en entrée du troisième échangeur thermique 37, lequel fonctionne alors en tant que condenseur. Le troisième échangeur thermique 37 et le premier échangeur de chaleur 7 fonctionnent en parallèle l'un de l'autre.

La capacité thermique est principalement assurée par le troisième échangeur thermique 37. La capacité thermique du premier échangeur de chaleur 7 correspond uniquement aux pertes thermiques de celui-ci et à celles des conduites nécessaires dans son intégration dans le conduit d'air soufflé 47.

Seule une très faible quantité du fluide réfrigérant circule à l'intérieur du premier échangeur de chaleur 7. Ceci permet de maintenir le premier échangeur de chaleur 7 à un niveau de température élevée du fait de la faible densité du fluide réfrigérant. De plus, ceci garantit que le fluide réfrigérant et l'huile ne sont pas pris au piège à l'intérieur du premier échangeur de chaleur 7.

Pour éviter une trop grande déperdition thermique avec le flux d'air refroidi, l'accès au premier échangeur de chaleur 7 est interdit grâce au système de volets 49 qui ferment la partie du conduit d'air soufflé 47 dans laquelle est logé le premier échangeur de chaleur 7 . Autrement dit, le flux d'air F ayant traversé le deuxième échangeur thermique 15 ne traverse pas le premier échangeur de chaleur 7.

En sortie du premier échangeur de chaleur 7 et du troisième échangeur thermique 37, le fluide réfrigérant, principalement en phase liquide, est détendu à une pression intermédiaire, respectivement, dans le premier organe de détente 11 et le troisième organe de détente 41.

Le premier organe de détente 11 et le troisième organe de détente 41 peuvent prendre la forme de dispositifs électriques et présenter ainsi une grande efficacité et une bonne contrôlabilité. En variante, ils peuvent prendre la forme d'orifices calibrés ou de dispositifs thermostatiques.

Le fluide réfrigérant qui se trouve entre le premier organe de détente 11 et le troisième organe de détente 41, d'une part, et le deuxième organe de détente 23, d'autre part, se trouve dans un état de pression et de température intermédiaires.

La totalité du flux de fluide réfrigérant est détendue de la pression intermédiaire à la pression d'évaporation à travers le deuxième organe de détente 23, puis évaporée dans le deuxième échangeur thermique 15.

Le fluide réfrigérant, essentiellement sous forme gazeuse, est ensuite envoyé à l'accumulateur 17 où un stockage de réfrigérant est constitué. La phase gazeuse est séparée de la phase liquide puis aspirée par le compresseur 5.

La figure 2 est un schéma qui montre le dispositif de la figure 1 dans un deuxième état de commutation et montre le dispositif 1 dans un mode de fonctionnement, dit « mode chauffage », destiné à chauffer le flux d'air apte à être distribué dans l'habitacle.

Le deuxième état de commutation permettant d'assurer le mode de fonctionnement dit « mode chauffage » est sélectionné par le changement de configuration du moyen de commutation 27, en mettant en communication de fluide la deuxième voie de la vanne trois voies 27 avec la troisième voie de la vanne trois voies 27. Ainsi, le fonctionnement du troisième échangeur thermique 37 est inversé. Il fonctionne, dans cette configuration, en tant qu'évaporateur. La sortie du troisième échangeur thermique 37 est reliée à la sortie du deuxième échangeur thermique 15, fonctionnant en tant qu'évaporateur 15.

Dans ce mode de réalisation, le deuxième échangeur thermique 15 et le troisième échangeur thermique 37 sont agencés en parallèle l'un par rapport l'autre.

Dans le conduit d'air soufflé 47, le système de volets 49 est disposé de telle manière que le flux d'air F traverse le premier échangeur de chaleur 7.

Selon cette disposition, la totalité du fluide réfrigérant sortant du compresseur 5 parvient à l'entrée du premier échangeur de chaleur 7. En sortie du premier échangeur de chaleur 7, le fluide réfrigérant est détendu dans le premier organe de détente 11 à un niveau de pression et de température intermédiaires. Le fluide réfrigérant est ensuite réparti entre le deuxième échangeur thermique 15 et le troisième échangeur thermique 37.

Une première partie du fluide réfrigérant est détendu à travers le troisième organe de détente 41 puis évaporé dans le troisième échangeur thermique 37. Une deuxième partie du fluide réfrigérant est évaporé dans le deuxième échangeur thermique 15. La première partie du fluide réfrigérant passe par la vanne trois voies 27 dans laquelle la deuxième voie est en connexion avec la troisième voie. Par suite, la première partie et la deuxième partie du fluide réfrigérant se rejoignent au niveau du deuxième point de jonction 35 avant de rejoindre l'accumulateur 17.

Selon une alternative du « mode chauffage », la première partie du fluide réfrigérant peut être pratiquement nul, grâce à la fermeture totale du troisième organe de détente 41. De même, selon une autre alternative du « mode chauffage », la deuxième partie du fluide réfrigérant peut être pratiquement nul, grâce à la fermeture totale du deuxième organe de détente 23.

En fonction de la quantité de fluide réfrigérant parcourant le deuxième échangeur thermique 15, il est possible d'assurer une fonction de déshumidification du flux d'air F de l'habitacle. Ce mode de fonctionnement complémentaire, dit « mode déshumidification », est similaire au « mode chauffage », excepté qu'une quantité définie de fluide réfrigérant parcourt le deuxième échangeur thermique 15 afin de refroidir et de déshumidifier le flux d'air F dans l'habitacle avant que celui-ci ne soit échauffé par le premier échangeur de chaleur 7.

La position du système de volets 49 est telle que le flux d'air F soufflé dans le conduit d'air soufflé 47 traverse à la fois le deuxième échangeur thermique 15 et le premier échangeur de chaleur 7.

Selon une alternative de réalisation, le système de volets 49 est susceptible de prendre des positions intermédiaires. La proportion du flux d'air F traversant le premier échangeur de chaleur 7 est alors ajustée afin d'assurer un mélange à température définie entre les parties du flux d'air ayant traversé le premier échangeur de chaleur 7 et ayant contourné le premier échangeur de chaleur 7.

Selon une autre alternative, la température finale du flux d'air F apte à être distribué dans l'habitacle est uniquement assurée par le premier échangeur de chaleur 7 dont la température est régulée en fonction de la quantité de fluide réfrigérant le parcourant.

Le deuxième organe de détente 23 est adapté pour contrôler la distribution de fluide réfrigérant entre le deuxième échangeur thermique 15 et le troisième échangeur thermique 37. Avantageusement, le deuxième organe de détente 23 coopére avec le troisième organe de détente 41 afin d'assurer un contrôle optimal de la distribution de fluide réfrigérant Par le contrôle du deuxième organe de détente 23, il est possible de gérer ainsi le « mode chauffage » et le « mode déshumidification ». Ceci permet d'optimiser la déshumidification tout en conservant une consommation énergétique minimale, et en garantissant un confort acceptable et un bon niveau de sécurité.

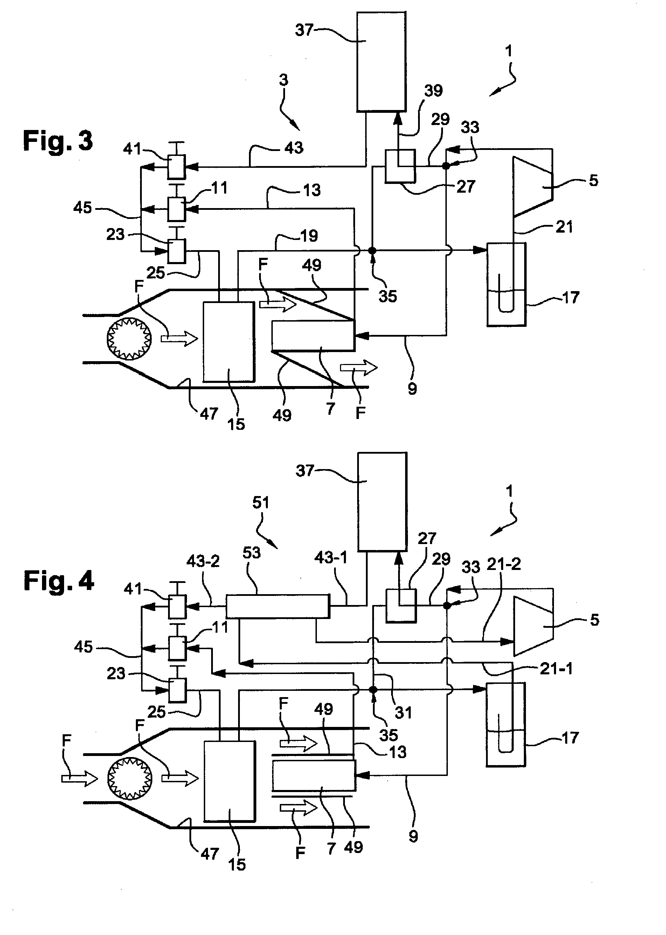

La figure 3 illustre un schéma qui montre le dispositif de la figure 1 dans un troisième mode de fonctionnement, dit « mode dégivrage » du dispositif de climatisation 1 destiné à dégivrer le troisième échangeur thermique 37.

Dans ce mode de fonctionnement, le moyen de commutation 27 se trouve dans la même configuration que dans le mode de fonctionnement dit « mode refroidissement » de la figure 1, excepté qu'une quantité significative de fluide réfrigérant, en particulier du fluide réfrigérant 'chaud' issu du compresseur 5, est envoyée à la fois dans le premier échangeur de chaleur 7 et dans le troisième échangeur thermique 37, afin de supprimer le givre formé sur le troisième échangeur thermique 37.

Le système de volets 49 est agencé de telle manière que le flux d'air F ayant traversé le deuxième échangeur thermique 15 est apte à traverser le premier échangeur de chaleur 7, afin d'être chauffé.

De façon particulière et afin d'améliorer le contrôle du système, le deuxième organe de détente 23 est ouvert au maximum. Ceci réduit également la capacité interne de refroidissement du système.

Le fluide réfrigérant est condensé dans le premier échangeur de chaleur 7 et dans le troisième échangeur thermique 37 avec une répartition sensiblement égale du fluide réfrigérant entre ces deux échangeurs thermiques. On assure ainsi le dégivrage du troisième échangeur thermique 37, et des conduites qui sont reliées au troisième échangeur thermique 37, et le chauffage du flux d'air F destiné à être distribué dans l'habitacle.

Ce mode de fonctionnement, dit « mode dégivrage », est particulièrement intéressant après une longue période de fonctionnement du circuit de fluide réfrigérant 3 en « mode chauffage » à des basses températures.

Avantageusement, en « mode dégivrage », le chauffage du flux d'air F propre à être distribué à l'intérieur de l'habitacle n'est pas interrompu. Le « mode dégivrage » peut être mis en oeuvre, pour de courtes périodes de temps, sans affecter le confort dans l'habitacle.

La figure 4 est une variante de réalisation du dispositif des figures précédente. La figure 4 montre un circuit de fluide réfrigérant 51 en tant que variante du circuit de fluide réfrigérant 3.

Tel qu'illustré, le circuit de fluide réfrigérant 51 fonctionne en « mode refroidissement », les autres modes de fonctionnement, c'est-à-dire les « mode chauffage », « mode déshumidification » et « mode dégivrage », se déduisant de l'agencement des figures 2 et 3, décrites précédemment.

Le circuit de fluide réfrigérant 51 est analogue au circuit de fluide réfrigérant 3 dans lequel un échangeur de chaleur interne 53 a été intégré. Un échangeur de chaleur interne est un dispositif assurant un échange thermique entre un fluide pris en deux points d'un même circuit, le fluide en question se trouvant dans des conditions de température et de pression différentes.

L'échangeur de chaleur interne 53 présente une première entrée reliée au deuxième orifice de connexion du troisième échangeur thermique 37 par l'intermédiaire d'une première section 43-1 de la neuvième conduite 43 et une première sortie reliée au troisième organe de détente 41 par l'intermédiaire d'une deuxième section 43-2 de la neuvième conduite 43.

Une deuxième entrée de l'échangeur interne 53 est reliée à la sortie de l'accumulateur 17 par l'intermédiaire d'une première section 21-1 de la quatrième conduite 21, tandis qu'une deuxième sortie de l'échangeur interne 53 est reliée à l'entrée du compresseur 5 par l'intermédiaire d'une deuxième section 21-2 de la quatrième conduite 21.

Cette variante de réalisation du dispositif de fluide réfrigérant est plus particulièrement avantageuse lorsque le fluide réfrigérant est de type supercritique. L'échangeur interne 53 est également particulièrement favorable dans le « mode refroidissement ».

Dans les deux parties en échange thermique de l'échangeur interne 53, le fluide réfrigérant se trouve dans un état de pression et/ou de température différent, notamment une partie haute pression et une partie basse pression. Le fluide réfrigérant est séparé en deux flux respectifs pour ces deux parties. Les parties haute pression et basse pression sont disposées en parallèle l'une de l'autre.

L'échangeur interne 53 n'a pas d'influence sur le « mode chauffage ». En effet, la chute de pression dans l'échangeur interne 53 est plus faible que la chute de pression qui se produit sans échangeur interne du côté basse pression dans le « mode refroidissement ». En effet, la quantité de fluide réfrigérant traversant le troisième échangeur thermique 37 est plus faible. La chute de pression générée par l'échangeur interne 53 s'ajoute à la détente si bien qu'il n'a pas d'impact sur les performances du circuit 51.

Selon une forme de réalisation de la présente invention, le premier organe de détente 11, le deuxième organe de détente 23 et le troisième organe de détente 41 peuvent être réalisés, physiquement, par trois dispositifs distincts dans le circuit de fluide réfrigérant 3 ou 51, comme représenté sur les figures 1 à 4.

Selon une autre forme de réalisation de la présente invention, et de façon particulièrement avantageuse, le premier organe de détente 11, le deuxième organe de détente 23 et le troisième organe de détente 41 peuvent être réalisés en tant qu'un unique dispositif-organe de détente dans le circuit de fluide réfrigérant 3 ou 51.

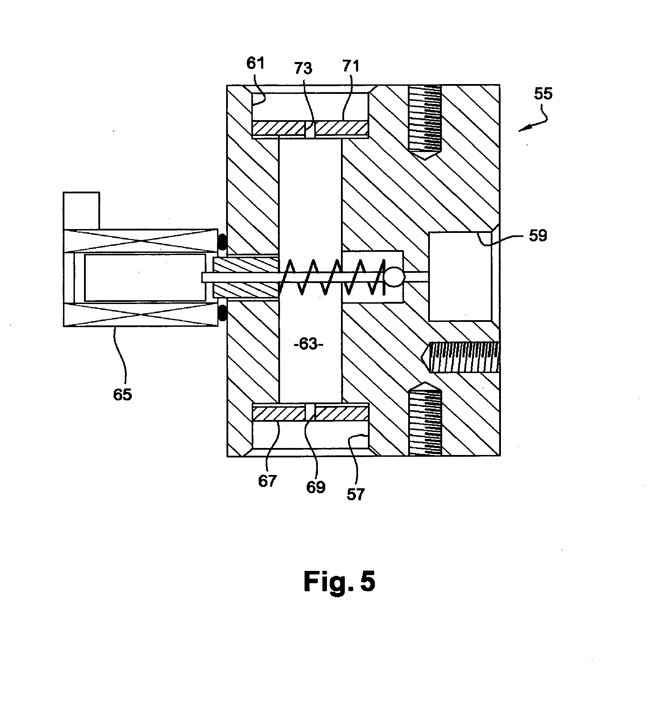

La figure 5 montre un unique dispositif-organe de détente 55, assurant la fonction du premier organe de détente 11, du deuxième organe de détente 23, et du troisième organe de détente 41.

Le dispositif-organe de détente 55 comprend un orifice d'entrée 57, réalisé notamment sous la forme d'un alésage, adaptée pour recevoir une extrémité de la deuxième conduite 13, et un orifice de sortie 59, réalisé en particulier sous la forme d'un alésage, adapté pour recevoir une extrémité de la quatrième tubulure 25.

Le dispositif-organe de détente 55 comprend en outre un orifice d'entrée-sortie 61, réalisé notamment sous la forme d'un alésage, adapté pour recevoir une extrémité de la neuvième conduite 43. Le dispositif-organe de détente 55 comprend en outre une chambre de détente 63 reliée à l'orifice d'entrée 57, l'orifice de sortie 59 et l'orifice d'entrée/sortie 61.

Dans l'exemple de réalisation de la figure 5, la chambre de détente 63 est réalisée sous la forme d'un premier alésage cylindrique reliant l'orifice d'entrée 57 et l'orifice d'entrée/sortie 61 et d'un deuxième alésage reliant en communication de fluide le premier alésage et l'orifice de sortie 59.

Un dispositif à détente électrique 65 est monté dans le dispositif-organe de détente 55. Le dispositif à détente électrique 65 constitue le deuxième organe de détente 23. Il contrôle l'ouverture depuis la chambre de détente 63 en direction de l'orifice de sortie 59. Ainsi, le dispositif à détente électrique 65 assure le passage du fluide tout en assurant la détente du fluide.

Le dispositif-organe de détente 55 comprend également un premier disque 67, logé dans l'alésage du premier orifice 57, et muni d'un passage calibré 69. Le passage calibré 69 constitue le premier organe de détente 11. Le passage calibré 69 a un diamètre défini en fonction de la détente et de la répartition de fluide réfrigérant souhaitées. D'autre part, l'orifice d'entrée/sortie 61 est muni d'un deuxième disque 71 muni d'un passage calibré 73. Le passage calibré 73 constitue le troisième organe de détente 41.

Le diamètre des passages calibrés 69 et 73 est choisi en fonction des optimisations souhaitées pour le circuit de fluide réfrigérant 3 ou 51. En particulier, le passage calibré 69 du premier disque 67 agencé dans l'orifice d'entrée 57 présente un diamètre inférieur au passage calibré 73 du deuxième disque 71 agencé dans l'orifice d'entrée/sortie 61. Ainsi, la quantité de fluide traversant le premier échangeur de chaleur 7, en « mode refroidissement », est inférieure à la quantité de fluide qui traverse le troisième échangeur thermique 37.

Dans tous les modes de fonctionnement, la transformation du fluide réfrigérant dans le dispositif-organe de détente 55 est réalisée en deux étapes : d'une part, une détente de la haute pression vers une pression intermédiaires et, d'autre part, une détente de la pression intermédiaire à la basse pression.

Dans le « mode refroidissement », le fluide réfrigérant provenant du premier échangeur de chaleur 7 et du troisième échangeur thermique 37 est détendu à travers les passages calibrés 69 et 73 respectifs des orifices d'entrée 57 et d'entrée/sortie 61 jusqu'à une pression intermédiaire. Le fluide réfrigérant ainsi détendu parvient à la chambre de détente 63 qui fonctionne en outre en tant que zone de mélange du fluide réfrigérant en provenance du premier échangeur de chaleur 7 et du troisième échangeur thermique 37. Le dispositif à détente électrique 65 assure une deuxième détente du fluide réfrigérant lors du passage de la chambre de détente 63 vers l'orifice de sortie 59. Autrement dit, la deuxième détente est réalisée grâce au dispositif à détente électrique 65 jusqu'à la pression d'évaporation.

Dans le « mode chauffage » ou le « mode déshumidification », le fluide réfrigérant provenant du premier échangeur de chaleur 7 est détendu à la pression intermédiaire dans la chambre de détente 63 avant d'être distribué et à nouveau détendu grâce au dispositif à détente électrique 65 pour l'orifice de sortie 59 et par le passage calibré 73 pour l'orifice d'entrée/sortie 61.

De plus, le dispositif à détente électrique 65 est adapté pour contrôler la distribution de fluide réfrigérant à basse pression entre l'orifice d'entrée/sortie 61 et l'orifice de sortie 59.

Le mode de réalisation du dispositif-organe de détente 55 selon la figure 5 comporte deux passages calibrés 69 et 73, et un dispositif à détente électrique 65. Toutefois, la présente invention couvre les agencements dans lesquels le dispositif-organe de détente comporte un unique passage calibré ou trois passages calibrés et/ou deux ou trois dispositifs à détente électrique. De même, il est envisageable dans le cadre de la présente invention que le dispositif-organe de détente comporte des dispositifs thermostatiques.

On a décrit un dispositif de climatisation 1 réversible présentant au moins quatre modes de fonctionnement. Ce circuit de fluide réfrigérant présente une conception simplifiée, réduisant les risques de fuites et les coûts de fabrication et de maintenance. Par ailleurs, la commande du circuit de fluide réfrigérant est également simplifiée.

Le dispositif à détente électrique 65 régule la distribution de fluide réfrigérant entre le deuxième échangeur thermique 15 et le troisième échangeur thermique 37 sur la base de paramètres de fonctionnement.

Le système de contrôle paramétrique peut comprendre une unité centrale de calcul, non représentée, commandant les différents modes de fonctionnement en fonction de paramètres d'entrées issus du panneau de commande disposé dans l'habitacle et/ou des températures extérieures et intérieures par l'intermédiaire du moyen de commutation 27 et/ou du dispositif-organe de détente, en particulier grâce au contrôle du dispositif à détente électrique 65.

Le mode de fonctionnement commandé sur le panneau de commande définit une température pour le dispositif-organe de détente, notamment pour le dispositif à détente électrique 65, et une capacité du compresseur 5. Un capteur de pression peut être installé pour détecter le givre éventuel au niveau du troisième échangeur thermique 37.

L'invention n'est pas limitée aux modes de réalisation décrits précédemment à titre d'exemples uniquement. En particulier, le dispositif-organe de détente 55 peut être réalisé au moyen d'un unique trou calibré et de deux dispositifs à détente électrique 65.

La vanne trois voies 27 peut être remplacée par deux vannes électriques commandées simultanément pour sélectionner les différents modes de fonctionnement du circuit. Pour chacun de ces modes, l'une des vannes est ouverte tandis que l'autre de ces vannes se trouve à l'état fermé. Indifféremment, la vanne trois voies et/ou les vannes électriques constituent des moyens de commutations au sens de l'invention.

Les figures 1 à 4 présentent un dispositif de climatisation de type 'direct'. Un dispositif de climatisation de type 'direct' se caractérise par le fait que le premier échangeur de chaleur 7 est traversé par le fluide réfrigérant.

Alternativement, la présente invention couvre également un dispositif de climatisation de type 'indirect'. Un dispositif de climatisation de type 'indirect' se caractérise par le fait que le premier échangeur de chaleur 7 n'est pas traversé par le fluide réfrigérant.

Un tel dispositif de climatisation de type 'indirect' se distingue de l'agencement décrit en relation avec les figures 1 à 4 par le fait que le circuit de fluide réfrigérant comporte un échangeur de chaleur complémentaire.

L'échangeur de chaleur complémentaire assure une fonction d'échangeur réfrigérant/fluide caloporteur qui permet un échange de chaleur entre le fluide réfrigérant et le fluide caloporteur circulant dans un second circuit en boucle fermée. Ainsi, l'échangeur de chaleur complémentaire est parcouru par le fluide réfrigérant circulant dans une première partie du circuit de fluide réfrigérant.

Par ailleurs, l'échangeur de chaleur complémentaire permet un échange de chaleur entre le fluide réfrigérant et le premier échangeur de chaleur. En effet, l'échangeur de chaleur complémentaire permet un échange de chaleur entre le fluide réfrigérant circulant dans la première partie du circuit de fluide réfrigérant et un fluide caloporteur circulant dans une seconde partie du circuit de fluide réfrigérant. La seconde partie du circuit de fluide réfrigérant comporte l'échangeur de chaleur complémentaire et le premier échangeur de chaleur.

L'échangeur de chaleur complémentaire comporte une première surface d'échange thermique parcourue par le réfrigérant et une deuxième surface d'échange thermique parcourue par le fluide caloporteur. Un tel agencement assure un échange thermique entre le réfrigérant et le fluide caloporteur.

La seconde partie du circuit de fluide réfrigérant peut également comporter des moyens de mise en circulation du fluide caloporteur, telle que notamment une pompe.

Le sens de circulation du fluide caloporteur circulant dans la seconde partie du circuit de fluide réfrigérant permet le transfert de chaleur entre l'échangeur de chaleur complémentaire et le premier échangeur de chaleur.

A la traversée de l'échangeur de chaleur complémentaire, le fluide réfrigérant échange de chaleur avec le fluide caloporteur. Ce dernier traverse, par la suite, le premier échangeur de chaleur. Le premier échangeur de chaleur est apte à permettre un transfert thermique entre le flux d'air F et le fluide caloporteur.

L'agencement du dispositif de climatisation selon une configuration de type 'indirect' ne modifie pas les divers modes de fonctionnement du dispositif de climatisation décrits précédemment.

Ainsi, les diverses configurations décrites en relation avec les figures 1 à 4, pour une architecture de type 'direct', sont également applicables à une architecture de type 'indirect'.

Il doit être bien entendu toutefois que ces exemples de fonctionnement sont donnés à titre d'illustration de l'objet de l'invention. Bien évidemment, l'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de réalisation décrits précédemment.

## Revendications

1. Dispositif de climatisation (1) pour un véhicule automobile comprenant un circuit de fluide réfrigérant (3 ; 51) comportant un compresseur (5), une branche de circuit aval comprenant un premier échangeur thermique (7) agencé pour être traversé par un flux d'air (F), apte à être distribué dans un habitacle automobile, et un premier organe de détente (11) disposé en aval, selon le sens de circulation du fluide réfrigérant, du premier échangeur thermique (7), et une branche de circuit amont comprenant un deuxième échangeur thermique (15) agencé pour être traversé par le flux d'air (F), apte à être distribué dans l'habitacle du véhicule, un deuxième organe de détente (23) agencé en amont, selon le sens de circulation du fluide réfrigérant, du deuxième échangeur thermique (15) et un accumulateur (17) disposé en aval, selon le sens de circulation du fluide réfrigérant, du deuxième échangeur thermique (15), le circuit de fluide réfrigérant (3 ; 51) comprenant en outre un troisième échangeur thermique (37) adapté pour fonctionner de manière réversible et apte à être traversé par un flux d'air extérieur à l'habitacle du véhicule, et un système de raccordement commutable pour relier sélectivement le troisième échangeur thermique (37) avec la branche de circuit amont et/ou la branche aval,
**caractérisé en ce que** le système de raccordement commutable comprend un moyen de commutation (27) relié à une première entrée/sortie du troisième échangeur thermique (37), à la branche de circuit aval, et à la branche de circuit amont, et **en ce que** le système de raccordement commutable comprend un troisième organe de détente (41) relié à une deuxième entrée/sortie du troisième échangeur thermique (37), au premier organe de détente (11) et au deuxième (23) organe de détente.

2. Dispositif selon la revendication 1, dans lequel le moyen de commutation (27) est relié à la branche de circuit aval en amont du premier échangeur thermique (7) et à la branche de circuit amont en aval du deuxième échangeur thermique (15).

3. Dispositif selon la revendication 1 ou 2, dans lequel le moyen de commutation (27) est relié en dérivation de la branche de circuit aval et/ou de la branche de circuit amont.

4. Dispositif selon l'une des revendications précédentes, dans lequel le premier organe de détente (11), le deuxième organe de détente (23) et le troisième organe de détente (41) sont réalisés sous la forme d'un unique dispositif-organe de détente (55).

5. Dispositif selon la revendication 4, dans lequel l'unique dispositif-organe de détente (55) est muni d'un orifice d'entrée (57) relié à la branche de circuit aval, d'un orifice de sortie (59) relié à la branche de circuit amont, et d'un orifice d'entrée/sortie (61) relié au troisième échangeur thermique (37).

6. Dispositif selon la revendication 5, dans lequel l'orifice d'entrée (57) est muni d'un premier disque (67) à orifice de passage calibré (69).

7. Dispositif selon la revendication 5 ou 6, dans lequel l'entrée/sortie (61) est munie d'un disque (71) à orifice de passage calibré (73).

8. Dispositif selon la revendication 7, dans lequel le passage calibré (69) du premier disque (67) a un diamètre inférieur au passage calibré (73) du deuxième disque (71).

9. Dispositif selon l'une des revendications 5 à 8, dans lequel l'unique dispositif-organe de détente (55) est muni d'au moins une chambre de détente (63) reliée en communication de fluide à l'orifice d'entrée (57) relié à la branche de circuit aval, à l'orifice de sortie (59) reliée à la branche de circuit amont, et à l'orifice d'entrée/sortie (61) reliée au troisième échangeur thermique (37).

10. Dispositif selon la revendication 9, dans lequel la chambre de détente (63) est reliée en communication de fluide avec au moins le premier organe de détente (11) et/ou le deuxième organe de détente (23) et/ou et le troisième organe de détente (41).

11. Dispositif selon l'une des revendications précédentes, dans lequel le système de raccordement commutable est adapté pour relier sélectivement le troisième échangeur thermique (37) en parallèle du premier échangeur thermique (15) et/ou du second échangeur thermique (7).

12. Dispositif selon l'une des revendications précédentes, dans lequel le circuit de fluide réfrigérant (51) comprend en outre un échangeur thermique interne (53).

13. Dispositif selon la revendication 12, dans lequel l'échangeur thermique interne (53) est relié, d'une part, au troisième échangeur thermique (37) et au troisième organe de détente (41), et, d'autre part, à l'accumulateur (17) et au compresseur (5).

14. Dispositif selon l'une des revendications précédentes, **caractérisé en ce que** le moyen de commutation est une vanne trois voies (27).

15. Dispositif selon l'une des revendications là 13, **caractérisé en ce que** le moyen de commutation est constitué de deux vannes électriques associées.

## Patentansprüche

1. Klimaanlage (1) für ein Kraftfahrzeug, welche einen Kältemittelkreislauf (3; 51) aufweist, welcher aufweist: einen Verdichter (5), einen stromabwärtigen Kreislaufzweig, der einen ersten Wärmetauscher (7), der dazu eingerichtet ist, von einem Luftstrom (F) durchströmt zu werden, der geeignet ist, in einem Kraftfahrzeuginnenraum verteilt zu werden, und ein erstes Expansionsorgan (11), das in der Zirkulationsrichtung des Kältemittels stromabwärts des ersten Wärmetauschers (7) angeordnet ist, aufweist, und einen stromaufwärtigen Kreislaufzweig, der einen zweiten Wärmetauscher (15), der dazu eingerichtet ist, von dem Luftstrom (F) durchströmt zu werden, der geeignet ist, in dem Kraftfahrzeuginnenraum verteilt zu werden, ein zweites Expansionsorgan (23), das in der Zirkulationsrichtung des Kältemittels stromaufwärts des zweiten Wärmetauschers (15) angeordnet ist, und einen Speicher (17), der in der Zirkulationsrichtung des Kältemittels stromabwärts des zweiten Wärmetauschers (15) angeordnet ist, aufweist, wobei der Kältemittelkreislauf (3; 51) außerdem einen dritten Wärmetauscher (37), der dazu eingerichtet ist, auf reversible Weise zu arbeiten, und geeignet ist, von einem Luftstrom außerhalb des Innenraums des Fahrzeugs durchströmt zu werden, und ein umschaltbares Anschlusssystem zum selektiven Verbinden des dritten Wärmetauschers (37) mit dem stromaufwärtigen Kreislaufzweig und/oder dem stromabwärtigen Zweig aufweist,
**dadurch gekennzeichnet, dass** das umschaltbare Anschlusssystem ein Umschaltmittel (27) aufweist, das mit einem ersten Eingang/Ausgang des dritten Wärmetauschers (37), mit dem stromabwärtigen Kreislaufzweig und mit dem stromaufwärtigen Kreislaufzweig verbunden ist, und dadurch, dass das umschaltbare Anschlusssystem ein drittes Expansionsorgan (41) aufweist, das mit einem zweiten Eingang/Ausgang des dritten Wärmetauschers (37), mit dem ersten Expansionsorgan (11) und mit dem zweiten Expansionsorgan (23) verbunden ist.

2. Klimaanlage nach Anspruch 1, wobei das Umschaltmittel (27) mit dem stromabwärtigen Kreislaufzweig stromaufwärts des ersten Wärmetauschers (7) und mit dem stromaufwärtigen Kreislaufzweig stromabwärts des zweiten Wärmetauschers (15) verbunden ist.

3. Klimaanlage nach Anspruch 1 oder 2, wobei das Umschaltmittel (27) mit einer Zweigleitung des stromabwärtigen Kreislaufzweigs und/oder des stromaufwärtigen Kreislaufzweigs verbunden ist.

4. Klimaanlage nach einem der vorhergehenden Ansprüche, wobei das erste Expansionsorgan (11), das zweite Expansionsorgan (23) und das dritte Expansionsorgan (41) in der Form einer einzigen Expansionsorganvorrichtung (55) ausgeführt sind.

5. Klimaanlage nach Anspruch 4, wobei die einzige Expansionsorganvorrichtung (55) mit einer Eintrittsöffnung (57), die mit dem stromabwärtigen Kreislaufzweig verbunden ist, mit einer Austrittsöffnung (59), die mit dem stromaufwärtigen Kreislaufzweig verbunden ist, und mit einer Eintritts-/Austrittsöffnung (61), die mit dem dritten Wärmetauscher (37) verbunden ist, ausgestattet ist.

6. Klimaanlage nach Anspruch 5, wobei die Eintrittsöffnung (57) mit einer ersten Scheibe (67) mit einer Öffnung mit kalibriertem Durchlass (69) ausgestattet ist.

7. Klimaanlage nach Anspruch 5 oder 6, wobei die Eintritts-/Austrittsöffnung (61) mit einer Scheibe (71) mit einer Öffnung mit kalibriertem Durchlass (73) ausgestattet ist.

8. Klimaanlage nach Anspruch 7, wobei der kalibrierte Durchlass (69) der ersten Scheibe (67) einen kleineren Durchmesser als der kalibrierte Durchlass (73) der zweiten Scheibe (71) aufweist.

9. Klimaanlage nach einem der Ansprüche 5 bis 8, wobei die einzige Expansionsorganvorrichtung (55) mit mindestens einer Expansionskammer (63) ausgestattet ist, die mit der Eintrittsöffnung (57), die mit dem stromabwärtigen Kreislaufzweig verbunden ist, mit der Austrittsöffnung (59), die mit dem stromaufwärtigen Kreislaufzweig verbunden ist, und mit der Eintritts-/Austrittsöffnung (61), die mit dem dritten Wärmetauscher (37) verbunden ist, in Fluidverbindung steht.

10. Klimaanlage nach Anspruch 9, wobei die Expansionskammer (63) mit mindestens dem ersten Expansionsorgan (11) und/oder dem zweiten Expansionsorgan (23) und/oder dem dritten Expansionsorgan (41) in Fluidverbindung steht.

11. Klimaanlage nach einem der vorhergehenden Ansprüche, wobei das umschaltbare Anschlusssystem dazu eingerichtet ist, den dritten Wärmetauscher (37) selektiv zu dem ersten Wärmetauscher (15) und/oder zu dem zweiten Wärmetauscher (7) parallel zu schalten.

12. Klimaanlage nach einem der vorhergehenden Ansprüche, wobei der Kältemittelkreislauf (51) außerdem einen inneren Wärmetauscher (53) aufweist.

13. Klimaanlage nach Anspruch 12, wobei der innere Wärmetauscher (53) einerseits mit dem dritten Wärmetauscher (37) und mit dem dritten Expansionsorgan (41) und andererseits mit dem Speicher (17) und mit dem Verdichter (5) verbunden ist.

14. Klimaanlage nach einem der vorhergehenden Ansprüche, **dadurch gekennzeichnet, dass** das Umschaltmittel ein Dreiwegeventil (27) ist.

15. Klimaanlage nach einem der Ansprüche 1 bis 13, **dadurch gekennzeichnet, dass** das Umschaltmittel aus zwei zugeordneten elektrischen Ventilen besteht.

## Claims

1. Air conditioning device (1) for a motor vehicle comprising a refrigerant circuit (3; 51) comprising a compressor (5), a downstream leg of the circuit comprising a first heat exchanger (7) arranged to be passed through by a stream (F) of air which can be distributed to a motor vehicle interior, and a first expansion member (11) positioned downstream, in the direction in which the refrigerant circulates, of the first heat exchanger (7), and an upstream leg of the circuit comprising a second heat exchanger (15) arranged to be passed through by the stream (F) of air which can be distributed to the vehicle interior, a second expansion member (23) positioned upstream, in the direction in which the refrigerant circulates, of the second heat exchanger (15), and an accumulator (17) positioned downstream, in the direction in which the refrigerant circulates, of the second heat exchanger (15), the refrigerant circuit (3; 51) further comprising a third heat exchanger (37) designed to operate reversibly and able to have a stream of air external to the vehicle interior passing through it, and a switchable connection system for selectively connecting the third heat exchanger (37) to the upstream leg of the circuit and/or the downstream leg,
**characterized in that**
the switchable connection system comprises a switching means (27) connected to a first inlet/outlet of the third heat exchanger (37), to the downstream leg of the circuit and to the upstream leg of the circuit, and **in that** the switchable connection system comprises a third expansion member (41) connected to a second inlet/outlet of the third heat exchanger (37), to the first expansion member (11) and to the second (23) expansion member.

2. Device according to Claim 1, in which the switching means (27) is connected to the downstream leg of the circuit upstream of the first heat exchanger (7) and to the upstream leg of the circuit downstream of the second heat exchanger (15).

3. Device according to Claim 1 or 2, in which the switching means (27) is connected as a bypass of the downstream leg of the circuit and/or the upstream leg of the circuit.

4. Device according to one of the preceding claims, in which the first expansion member (11), the second expansion member (23) and the third expansion member (41) are produced in the form of a single expansion member-device (55).

5. Device according to Claim 4, in which the single expansion member-device (55) is provided with an inlet orifice (57) connected to the downstream leg of the circuit, with an outlet orifice (59) connected to the upstream leg of the circuit, and with an inlet/outlet orifice (61) connected to the third heat exchanger (37).

6. Device according to Claim 5, in which the inlet orifice (57) is equipped with a first orifice plate (67) with a calibrated orifice (69).

7. Device according to Claim 5 or 6, in which the inlet/outlet (61) is provided with an orifice plate (71) with a calibrated orifice (73).

8. Device according to Claim 7, in which the calibrated orifice (69) of the first orifice plate (67) has a diameter smaller than the calibrated orifice (73) of the second orifice plate (71).

9. Device according to one of Claims 5 to 8, in which the single expansion member-device (55) is provided with at least one expansion chamber (63) connected in fluidic communication to the inlet orifice (57) connected to the downstream leg of the circuit, to the outlet orifice (59) connected to the upstream leg of the circuit, and to the inlet/outlet orifice (61) connected to the third heat exchanger (37).

10. Device according to Claim 9, in which the expansion chamber (63) is connected in fluidic communication to at least the first expansion member (11) and/or the second expansion member (23) and/or the third expansion member (41).

11. Device according to one of the preceding claims, in which the switchable connection system is designed selectively to connect the third heat exchanger (37) in parallel with the first heat exchanger (15) and/or with the second heat exchanger (7).

12. Device according to one of the preceding claims, in which the refrigerant circuit (51) further comprises an internal heat exchanger (53).

13. Device according to Claim 12, in which the internal heat exchanger (53) is connected, on the one hand, to the third heat exchanger (37) and to the third expansion member (41) and, on the other hand, to the accumulator (17) and to the compressor (5).

14. Device according to one of the preceding claims, **characterized in that** the switching means is a three-way valve (27).

15. Device according to one of Claims 1 to 13, **characterized in that** the switching means consists of two combined electric valves.
